# EUROPEAN PATENT APPLICATION

(11) **EP 3 750 422 A1**
(43) Date of publication of application: **16.12.2020**
(21) Application number: 19179899.0
(22) Date of filing: 13.06.2019
(51) Int. Cl.: A24F 47/00, H02J 7/00

(54) **APPARATUS AND METHOD FOR BATTERY MONITORING AND DEVICE CONTROL IN A SMOKING SUBSTITUTE DEVICE**

(71) Applicant: NERUDIA LIMITED, Liverpool Merseyside L24 9HP (GB)
(72) Inventor: The designation of the inventor has not yet been filed
(74) Representative: Mewburn Ellis LLP

(57) **Abstract**

The present disclosure relates to a smoking substitute device comprising a heating device, at least one auxiliary device configured to perform a background task, and a battery configured to supply power to the heating device and to the auxiliary device. The device further comprises a control unit, that is configured for obtaining data indicative of a state of charge of the battery. If it is determined that the state of charge meets a predetermined criterion, indicating that the state of charge is inadequate to permit normal operation of the heating device, the control unit is configured to prevent the supply of power to the heating device whilst continuing the supply of power to the at least one auxiliary device.

## Description

### TECHNICAL FIELD

The present invention relates to smoking substitute devices and particularly, although not exclusively, to apparatus and methods for controlling operation of a smoking substitute device.

### BACKGROUND

The smoking of tobacco is generally considered to expose a smoker to potentially harmful substances. It is generally thought that a significant amount of the potentially harmful substances are generated through the heat caused by the burning and/or combustion of the tobacco and the constituents of the burnt tobacco in the tobacco smoke itself.

Conventional combustible smoking articles, such as cigarettes, typically comprise a cylindrical rod of tobacco comprising shreds of tobacco which is surrounded by a wrapper, and usually also a cylindrical filter axially aligned in an abutting relationship with the wrapped tobacco rod. The filter typically comprises a filtration material which is circumscribed by a plug wrap. The wrapped tobacco rod and the filter are joined together by a wrapped band of tipping paper that circumscribes the entire length of the filter and an adjacent portion of the wrapped tobacco rod. A conventional cigarette of this type is used by lighting the end opposite to the filter, and burning the tobacco rod. The smoker receives mainstream smoke into their mouth by drawing on the mouth end or filter end of the cigarette.

Combustion of organic material such as tobacco is known to produce tar and other potentially harmful byproducts. There have been proposed various smoking substitute devices in order to avoid the smoking of tobacco.

Such smoking substitute devices can form part of nicotine replacement therapies aimed at people who wish to stop smoking and overcome a dependence on nicotine.

Smoking substitute devices may comprise electronic systems that permit a user to simulate the act of smoking by producing an aerosol (also referred to as a "vapour") that is drawn into the lungs through the mouth (inhaled) and then exhaled. The inhaled aerosol typically bears nicotine and/or flavourings without, or with fewer of, the odour and health risks associated with traditional smoking.

In general, smoking substitute devices are intended to provide a substitute for the rituals of smoking, whilst providing the user with a similar experience and satisfaction to those experienced with traditional smoking and tobacco products. Some smoking substitute systems use smoking substitute articles (also referred to as a "consumables") that are designed to resemble a traditional cigarette and are cylindrical in form with a mouthpiece at one end.

The popularity and use of smoking substitute devices has grown rapidly in the past few years. Although originally marketed as an aid to assist habitual smokers wishing to quit tobacco smoking, consumers are increasingly viewing smoking substitute devices as desirable lifestyle accessories. Some smoking substitute devices are designed to resemble a traditional cigarette and are cylindrical in form with a mouthpiece at one end. Other smoking substitute devices do not generally resemble a cigarette (for example, the smoking substitute device may have a generally box-like form).

There are a number of different categories of smoking substitute devices, each utilising a different smoking substitute approach. A smoking substitute approach corresponds to the manner in which the substitute system operates for a user.

One approach for a smoking substitute device is the so-called "vaping" approach, in which a vapourisable liquid, typically referred to (and referred to herein) as "e-liquid", is heated by a heating device to produce an aerosol vapour which is inhaled by a user. An e-liquid typically includes a base liquid as well as nicotine and/or flavourings. The resulting vapour therefore typically contains nicotine and/or flavourings. The base liquid may include propylene glycol and/or vegetable glycerin.

A typical vaping smoking substitute device includes a mouthpiece, a power source (typically a battery), a tank for containing e-liquid, as well as a heating device. In use, electrical energy is supplied from the power source to the heating device, which heats the e-liquid to produce an aerosol (or "vapour") which is inhaled by a user through the mouthpiece.

Vaping smoking substitute devices can be configured in a variety of ways. For example, there are "closed system" vaping smoking substitute devices which typically have a sealed tank and heating element which is pre-filled with e-liquid and is not intended to be refilled by an end user. One subset of closed system vaping smoking substitute devices include a main body which includes the power source, wherein the main body is configured to be physically and electrically coupled to a consumable including the tank and the heating element. In this way, when the tank of a consumable has been emptied, the main body can be reused by connecting it to a new consumable. Another subset of closed system vaping smoking substitute devices are completely disposable, and intended for one-use only.

There are also "open system" vaping smoking substitute devices which typically have a tank that is configured to be refilled by a user, so the device can be used multiple times.

An example vaping smoking substitute device is the myblu™ e-cigarette. The myblu™ e-cigarette is a closed system device which includes a main body and a consumable. The main body and consumable are physically and electrically coupled together by pushing the consumable into the main body. The main body includes a rechargeable battery. The consumable includes a mouthpiece, a sealed tank which contains e-liquid, as well as a heating device, which for this device is a heating filament coiled around a portion of a wick which is partially immersed in the e-liquid. The device is activated when a microprocessor on board the main body detects a user inhaling through the mouthpiece. When the device is activated, electrical energy is supplied from the power source to the heating device, which heats e-liquid from the tank to produce a vapour which is inhaled by a user through the mouthpiece.

Another example vaping smoking substitute device is the blu PRO™ e-cigarette. The blu PRO™ e-cigarette is an open system device which includes a main body, a (refillable) tank, and a mouthpiece. The main body and tank are physically and electrically coupled together by screwing one to the other. The mouthpiece and refillable tank are physically coupled together by screwing one to the other, and detaching the mouthpiece from the refillable tank allows the tank to be refilled with e-liquid. The device is activated by a button on the main body. When the device is activated, electrical energy is supplied from the power source to a heating device, which heats e-liquid from the tank to produce a vapour which is inhaled by a user through the mouthpiece.

Another approach for a smoking substitute system is the so-called Heated Tobacco ("HT") approach in which tobacco (rather than an "e-liquid") is heated or warmed to release vapour. HT is also known as "heat not burn" ("HNB"). The tobacco may be leaf tobacco or reconstituted tobacco. The vapour may contain nicotine and/or flavourings. In the HT approach the intention is that the tobacco is heated but not burned, i.e. the tobacco does not undergo combustion.

A typical HT smoking substitute system may include a device and a consumable. The consumable may include the tobacco material. The device and consumable may be configured to be physically coupled together. In use, heat may be imparted to the tobacco material by a heating element of the device, wherein airflow through the tobacco material causes components in the tobacco material to be released as vapour. A vapour may also be formed from a carrier in the tobacco material (this carrier may for example include propylene glycol and/or vegetable glycerine) and additionally volatile compounds released from the tobacco. The released vapour may be entrained in the airflow drawn through the tobacco.

As the vapour passes through the consumable (entrained in the airflow) from the location of vaporisation to an outlet of the consumable (e.g. a mouthpiece), the vapour cools and condenses to form an aerosol for inhalation by the user. The aerosol will normally contain the volatile compounds.

In HT smoking substitute systems, heating as opposed to burning the tobacco material is believed to cause fewer, or smaller quantities, of the more harmful compounds ordinarily produced during smoking. Consequently, the HT approach may reduce the odour and/or health risks that can arise through the burning, combustion and pyrolytic degradation of tobacco.

There may be a need for improved design of smoking substitute systems, in particular HT smoking substitute systems, to enhance the user experience and improve the function of the HT smoking substitute system.

An example of the HT approach is the IQOS™ smoking substitute device from Philip Morris Ltd. The IQOS™ smoking substitute device uses a consumable, including reconstituted tobacco located in a wrapper. The consumable includes a holder incorporating a mouthpiece. The consumable may be inserted into a main body that includes a heating device. The heating device has a thermally conductive heating knife which penetrates the reconstituted tobacco of the consumable, when the consumable is inserted into the heating device. Activation of the heating device heats the heating element (in this case a heating knife), which, in turn, heats the tobacco in the consumable. The heating of the tobacco causes it to release nicotine vapour and flavourings which may be drawn through the mouthpiece by the user through inhalation.

A second example of the HT approach is the device known as "Glo"™ from British American Tobacco p.l.c. Glo™ comprises a relatively thin consumable. The consumable includes leaf tobacco which is heated by a heating device located in a main body. When the consumable is placed in the main body, the tobacco is surrounded by a heating element of the heating device. Activation of the heating device heats the heating element, which, in turn, heats the tobacco in the consumable. The heating of the tobacco causes it to release nicotine vapour and flavourings which may be drawn through the consumable by the user through inhalation. The tobacco, when heated by the heating device, is configured to produce vapour when heated rather than when burned (as in a smoking apparatus, e.g. a cigarette). The tobacco may contain high levels of aerosol formers (carrier), such as vegetable glycerine ("VG") or propylene glycol ("PG").

The present inventor(s) have observed that most smoking substitute devices currently on the market are configured to operate in isolation of other devices, which limits the functions the smoking substitute devices can perform.

The present inventor(s) have also observed that, as smoking substitute devices become more sophisticated and are able to perform more functions, certain of those functions of a smoking substitute device become important to the user, beyond the core function of heating liquid and/or tobacco. For example, the transmission of component data from a smoking substitute device to a mobile device can be an important function that the user may wish to protect and maintain during operation of the smoking substitute device. Other data acquisition, storage and transmission functions may also be important to the user.

The present invention has been devised in light of the above considerations.

### Summary of the Invention

At its most general, the present invention provides a smoking substitute device that is configured to implement a sophisticated and technically improved shutdown or "power-off process. The smoking substitute device embodies the recognition that, when there is insufficient battery power to provide enough heat to the heating element for it to operate at a level required by the user to provide a satisfactory smoking substitute experience, it is preferable to temporarily suspend the operation of that heating device and to instead direct remaining battery power towards enabling continued operation of one or more auxiliary components of the smoking substitute device. In particular, it may be preferable to prioritise the continued operation of data critical functions such as telemetry and/or the recordal and/or storage of data. The smoking substitute device may be network enabled in order to communicate wirelessly with a portable communication terminal such as a mobile phone or other mobile device. The smoking substitute device may be configured to provide notification to the user when the improved shutdown process is to be initiated. Such notification may be provided either directly via an output of the smoking substitute device and or it may be provided via an output of a mobile device with which the smoking substitute device communicates. The smoking substitute device may be configured to discontinue the improved shutdown process, and to resume normal operation including functioning of the heating element, upon detection that the smoking substitute device has been recharged and therefore has enough power to once again able to function normally.

According to a first aspect of the invention, there may be provided a smoking substitute device comprising a heating device, at least one auxiliary device configured to perform a background task, a battery configured to supply power to the heating device and the auxiliary device; and a control unit. The control unit may be configured to obtain data indicative of a state of charge of the battery. The smoking substitute device may be configured such that, if the determined state of charge meets a predetermined criterion indicating that the state of charge is inadequate to permit normal operation of the heating device, the control unit will prevent the supply of power to the heating device whilst continuing the supply of power to the at least one auxiliary device.

The "prevention" of the supply of power to the heating device, by the control unit, need not be a permanent or irreversible prevention. Rather, it may be a pausing, or a temporary suspension, of that supply, until such a time that it is determined that the state of charge of the battery is sufficient to resume supply of power to the heating device, and to permit normal operation of the heating device. The control unit should therefore be configured to reversibly switch the power supply away from the heating device, when the predetermined criterion is met.

The temporary prevention of the power supply to the heating device may be implemented by any suitable means. For example, it may compromise the control unit operating a switch to effectively "switch off" the power supply to the heating device, or it may comprise temporarily rerouting or blocking the current flow to the heating device. The steps taken to prevent power supply to the heating device should be temporary, and reversible, so that the heating device can resume normal operation, once the device's battery is charged to a sufficient level as to support such normal operation.

The so-called "auxiliary device" may comprise any suitable component, within the smoking substitute device, other than the heating device. The function, or one of the functions, carried out by such a component can be regarded as its "background task". For example, the auxiliary device may comprise a telemetry means such as a wireless interface, for example a Bluetooth™ antenna, and one of its background tasks may comprise effecting wireless communication between the smoking substitute device and a mobile device such as a mobile phone, smart phone, tablet computer or laptop computer. In such an example, the background task of communicating with a mobile device may comprise transmitting operational data regarding other components of the smoking substitute device - such as, for example, indicators of battery charge level (discussed further below), usage information derived from an airflow sensor, and/or consumable data obtained by a consumable data reader within the smoking substitute device.

Another example of an auxiliary device is an air flow sensor, for which an associated background task is to sense air flow, i.e. to sense an inhale action by the user. In some embodiments, the air flow sensor has an additional background task of providing sensor information to a control unit, in order to activate operation of the smoking substitute device when an inhale is sensed. For example, a smoking substitute device may be provided without an on/off button but instead rely on the air flow sensor to activate operation.

Another example of an auxiliary device is a consumable data reader. This may comprise any suitable electronic reader such as a barcode reader, for which an associated "background task" is to read information from a consumable (or "refill" or "pod") that is inserted into, or otherwise connected to, the smoking substitute device. A further background task of the consumable data reader may be to transmit data to a memory within the smoking substitute device, and/or to a control unit such as a microprocessor therein.

Another example of an auxiliary device is a memory, such as a non-volatile memory. Its background task may be to log operational data and/or usage data. For example, the memory may include a buffer, for which a background task is to repeatedly/cyclically log new data and delete the oldest data stored thereon. It may also have a background task of transferring data to a more permanent memory means. The memory may also have a background task of communicating with a control unit, which itself may also be regarded as an auxiliary device within the smoking substitute device, and/or to the wireless interface, for subsequent transmission of data to a mobile device. The control unit may carry out a number of background tasks such as using operational data received from the memory or from other components and manipulating that data to provide statistical data and/or other forms of data that represent how the device is operating, and possibly to detect any operation errors or faults or dangers. The control unit may also perform a background task of transferring data to the memory and/or to the wireless interface.

The step of "obtaining data indicative of a state of charge of the battery", at the control unit, may comprise obtaining one or measurements from one or more components within the smoking substitute device. They could be raw data measurements, obtained e.g. from sensors, and/or they could be the results of calculations or determinations made by analogue components within the smoking substitute device, based on raw data measurements.

Alternatively or additionally, the step of "obtaining data indicative of a state of charge of the battery", at the control unit, may comprise the control unit receiving, via the wireless interface, data measurements and/or the results of calculations or determinations that have been made by a second control means, external to the smoking substitute device.

The step of 'determining' whether a state of charge of the battery meets a predetermined criterion may be carried out by the control unit of the smoking substitute device. Alternatively, it may be carried by a second control unit, external to the smoking substitute device. Such a second control unit may comprise any combination of hardware and/or software and may be comprised within any of: a mobile device that is in wireless communication with the smoking substitute device, an application running on a mobile device and a cloud-based application.

For example, components such as sensors within the smoking substitute device may be configured to transmit raw measurement data to the wireless interface, for onward transmission to a mobile device on which an appropriate application is installed. Calculations may then be carried out externally to the smoking substitute device, at the mobile device or in the "cloud", using that raw measurement data. For example, the determination of whether the state of charge of the battery meets a predetermined criterion may be made at the mobile device or "cloud", based on raw data received from the wireless interface of the smoking substitute device. The result of that determination can then be transmitted back to the control unit of the smoking substitute device, via the wireless interface, in order for the control unit to carry out the step of temporarily preventing power supply to the hearting device, when the predetermined criterion is met.

The smoking substitute device may be controlled to monitor, analyse and/or determine other component data, which might also be referred to as "auxiliary data", in addition to battery charge status data. For example, it may monitor, analyse and/or determine data pertaining to one or more of the auxiliary devices, examples of which are given above. For example, it may store data read by the consumable data reader, and/or it may transmit some or all of that data to a mobile device, via its wireless interface. It may also monitor, store and/or transmit data obtained from the airflow sensor. For example, that data may be used to determine - either within the control unit of the smoking substitute device or at a linked mobile device - statistics relating to usage including frequency, usage patterns and user preferences.

The heating device may comprise a heating element. The smoking substitute device may comprise battery monitoring circuitry configured to monitor a voltage provided by the battery, wherein that voltage is regarded as being indicative of the state of charge of the battery. The battery monitoring circuitry may comprise any suitable components configured to sense, measure or otherwise obtain data indicative of an output voltage of the battery, i.e. a voltage applied to power the heating device. The smoking substitute may comprise a Low Dropout (LDO) voltage regulator, for example a 3V LDO voltage regulator.

The smoking substitute device may be configured such that the predetermined criterion is deemed to have been met when the magnitude of a voltage provided by the battery is equal to or less than a predetermined threshold. That predetermined threshold may be set or selected in order to be greater than the magnitude of a drop out voltage. For example, the drop out voltage may comprise a voltage differential required between the input and output terminals of an LDO voltage regulator in order to provide full power to components of the smoking substitute device, such as the battery. The magnitude of the drop out voltage may be set or selected as being the voltage at which a user of the smoking substitute device would detect that the heating device of smoking substitute device is no longer functioning normally, for example due to a reduction in the amount of vapour produced during a smoking substitute action. The magnitude of the drop out voltage may be set or selected as being the voltage at which it is no longer possible for the heating device to function within defined operational parameters of the smoking substitute device. For example, it may be the voltage at which the battery can no longer supply a defined amount of heating power to the heating device.

The magnitude of predetermined threshold may be set or selected to be less than 1V greater than that of a drop out voltage. For example, if the drop out voltage is 3V, the magnitude of predetermined threshold may be a value in the range 3.1V-3.3V.

As mentioned above, the at least one auxiliary device may include any one or more of: a control unit, a memory, a wireless interface, a Bluetooth antenna, a light, an LED and an airflow sensor. The smoking substitute device may be configured to continue power supply to one or more of the auxiliary devices during a time period in which the provision of power supply to the heating device has been suspended.

The at least one auxiliary device may be configured to record and/or store auxiliary data, during part or all of a time period in which the control unit prevents the supply of power to the heating device. For example, it may log, move or store telemetry data.

The smoking substitute device may be configured for provision of a notification to a user, when the predetermined criterion is met. That notification may provided directly, by the smoking substitute device itself, to the user. The notification may comprise any combination of visual, audible and readable signals. For example the notification may be provided via any of: a light, an LED or a screen, comprised within the smoking substitute device.

The smoking substitute device may be configured for transfer of data to a mobile device, such as a mobile phone, tablet or laptop. It may further be configured to receive data or other signals from a mobile device. When the smoking substitute device is configured for provision of a notification to a user, when the predetermined criterion is met, that notification may be provided to the user via an output of the mobile device. The smoking substitute device may be configured for transfer of data to an application running on the mobile device and the application may prompt provision of the notification to the user, via an output of the mobile device. The application may be a cloud-based or other virtual application.

According to another aspect of the invention, a method is provided for controlling an operation of a smoking substitute device, wherein said smoking substitute device comprises a heating device, at least one auxiliary device configured to perform a background task, a battery configured to supply power to the heating device and the auxiliary device, and a control unit. The method comprises obtaining, at the control unit, data indicative of a state of charge of the battery; determining whether or not the determined state of charge meets a predetermined criterion indicating that the state of charge is inadequate to permit normal operation of the heating device; and, if the determined state of charge meets the predetermined criterion, configuring the control unit to prevent the supply of power to the heating device whilst continuing the supply of power to the at least one auxiliary device.

As mentioned above, the control unit may obtain data indicative of a state of charge of the battery directly form components within the smoking substitute device, or from a mobile device, via a wireless interface of the smoking substitute device. The control unit may carry out the step of determining whether or not the determined state of charge meets a predetermined criterion, or that determination may be made by a second control unit, external to the smoking substitute device.

The invention includes the combination of the aspects and preferred features described except where such a combination is clearly impermissible or expressly avoided.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Summary of the Figures

Embodiments and experiments illustrating the principles of the invention will now be discussed with reference to the accompanying figures in which:
**Figure 1** shows an example system for managing a smoking substitute device.
**Figure 2(a)** shows an example smoking substitute device for use as the smoking substitute device in the system of Fig. 1.
**Figure 2(b)** shows the main body of the smoking substitute device of Fig. 2(a) without the consumable.
**Figure 2(c)** shows the consumable of the smoking substitute device of Fig. 2(a) without the main body.
**Figure 3(a)** is a schematic view of the main body of the smoking substitute device of Fig. 2(a).
**Figure 3(b)** is a schematic view of the consumable of the smoking substitute device of Fig. 2(a).
**Figure 4****.** is a flow chart of a component monitoring method that contributes to an embodiment of the invention.
**Figure 5****.** is a flow chart of a battery status data comparison and device control method, for controlling operation of a smoking substitute device in accordance with an embodiment of the invention.

### Detailed Description of the Invention

Aspects and embodiments of the present invention will now be discussed with reference to the accompanying figures. Further aspects and embodiments will be apparent to those skilled in the art. All documents mentioned in this text are incorporated herein by reference.

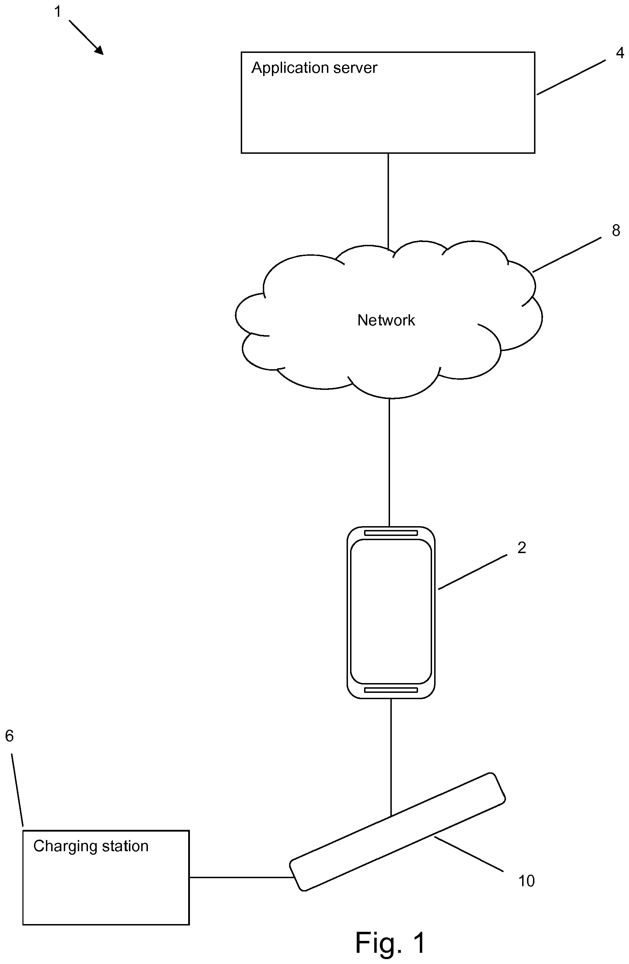

Fig. 1 shows an example system 1 for managing a smoking substitute device 10.

The system 1 as shown in Fig. 1 includes a mobile device 2, an application server 4, an optional charging station 6, as well as the smoking substitute device 10.

The smoking substitute device 10 is configured to communicate wirelessly, e.g. via Bluetooth™, with an application (or "app") installed on the mobile device 2, e.g. via a suitable wireless interface (not shown) on the mobile device 2. The mobile device 2 may be a mobile phone, for example. The application on the mobile phone is configured to communicate with the application server 4, via a network 8. The application server 4 may utilise cloud storage, for example.

The network 8 may include a cellular network and/or the internet.

A skilled person would readily appreciate that the mobile device 2 may be configured to communicate via the network 8 according to various communication channels, preferably a wireless communication channel such as via a cellular network (e.g. according to a standard protocol, such as 3G or 4G) or via a WiFi network.

The app installed on the mobile device and the application server 4 may be configured to assist a user with their smoking substitute device 10, based on information communicated between the smoking substitute device 10 and the app and/or information communicated between the app and the application server 4.

The charging station 6 (if present) may be configured to charge (and optionally communicate with) the smoking substitute device 10, via a charging port on the smoking substitute device 10. The charging port on the smoking substitute device 10 may be a USB port, for example, which may allow the smoking substitute device to be charged by any USB-compatible device capable of delivering power to the smoking substitute device 10 via a suitable USB cable (in this case the USB-compatible device would be acting as the charging station 6). Alternatively, the charging station could be a docking station specifically configured to dock with the smoking substitute device 10 and charge the smoking substitute device 10 via the charging port on the smoking substitute device 10.

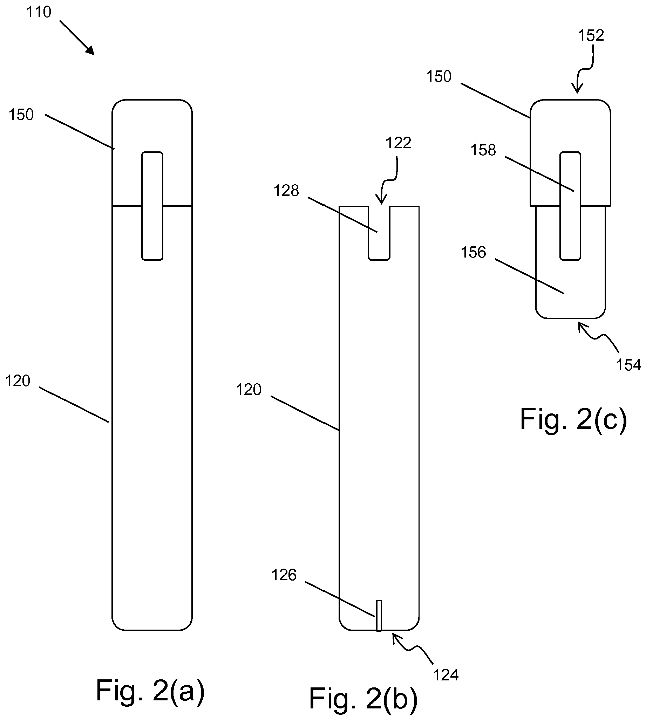

Fig. 2(a) shows an example smoking substitute device 110 for use as the smoking substitute device 10 in the system 1 of Fig. 1.

In this example, the smoking substitute device 110 includes a main body 120 and a consumable 150. The consumable 150 may alternatively be referred to as a "pod".

In this example, the smoking substitute device 110 is a closed system vaping device, wherein the consumable 150 includes a sealed tank 156 and is intended for one-use only.

Fig. 2(a) shows the smoking substitute device 110 with the main body 120 physically coupled to the consumable 150.

Fig. 2(b) shows the main body 120 of the smoking substitute device 110 without the consumable 150.

Fig. 2(c) shows the consumable 150 of the smoking substitute device 110 without the main body 120.

The main body 120 and the consumable 150 are configured to be physically coupled together, in this example by pushing the consumable 150 into an aperture in a top end 122 of the main body 120, e.g. with the consumable 150 being retained in the aperture via an interference fit. In other examples, the main body 120 and the consumable could be physically coupled together by screwing one onto the other, through a bayonet fitting, or through a snap engagement mechanism, for example. An optional light 126, e.g. an LED located behind a small translucent cover, is located a bottom end 124 of the main body 120. The light 126 may be configured to illuminate when the smoking substitute device 110 is activated.

The consumable 150 includes a mouthpiece (not shown) at a top end 152 of the consumable 150, as well as one or more air inlets (not shown in Fig. 2) so that air can be drawn into the smoking substitute device 110 when a user inhales through the mouthpiece. At a bottom end 154 of the consumable 150, there is located a tank 156 that contains e-liquid. The tank 156 may be a translucent body, for example.

The tank 156 preferably includes a window 158, so that the amount of e-liquid in the tank 156 can be visually assessed. The main body 120 includes a slot 128 so that the window 158 of the consumable 150 can be seen whilst the rest of the tank 156 is obscured from view when the consumable 150 is inserted into the aperture in the top end 122 of the main body 120.

In this present embodiment, the consumable 302 is a "single-use" consumable. That is, upon exhausting the e-liquid in the tank 156, the intention is that the user disposes of the whole consumable 150. In other embodiments, the e-liquid (i.e. aerosol former) may be the only part of the system that is truly "single-use". In such embodiments, the tank 156 may be refillable with e-liquid or the e-liquid may be stored in a non-consumable component of the system. For example, the e-liquid may be stored in a tank located in the device or stored in another component that is itself not single-use (e.g. a refillable tank).

The tank 156 may be referred to as a "clearomizer" if it includes a window 158, or a "cartomizer" if it does not.

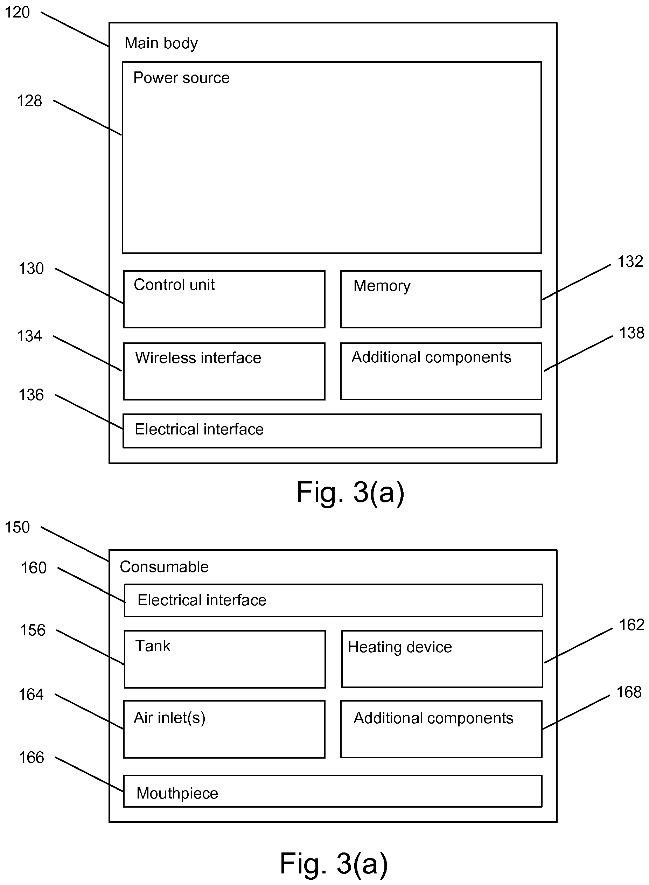

Fig. 3(a) is a schematic view of the main body 120 of the smoking substitute device 110.

Fig. 3(b) is a schematic view of the consumable 150 of the smoking substitute device 110.

As shown in Fig. 3(a), the main body 120 includes a power source 128, a control unit 130, a memory 132, a wireless interface 134, an electrical interface 136, and, optionally, one or more additional components 138.

The power source 128 is preferably a battery, more preferably a rechargeable battery.

The control unit 130 may include a microprocessor, for example.

The memory 132 is preferably includes non-volatile memory.

The wireless interface 134 is preferably configured to communicate wirelessly with the mobile device 2, e.g. via Bluetooth. To this end, the wireless interface 134 could include a Bluetooth™ antenna. Other wireless communication interfaces, e.g. WiFi, are also possible.

The electrical interface 136 of the main body 120 may include one or more electrical contacts. The electrical interface 136 may be located in, and preferably at the bottom of, the aperture in the top end 122 of the main body 120. When the main body 120 is physically coupled to the consumable 150, the electrical interface 136 may be configured to pass electrical power from the power source 128 to (e.g. a heating device of) the consumable 150 when the smoking substitute device 110 is activated, e.g. via the electrical interface 160 of the consumable 150 (discussed below). When the main body 120 is not physically coupled to the consumable 150, the electrical interface may be configured to receive power from the charging station 6.

The additional components 138 of the main body 120 may include the optional light 126 discussed above.

The additional components 138 of the main body 120 may, if the power source 128 is a rechargeable battery, include a charging port configured to receive power from the charging station 6. This may be located at the bottom end 124 of the main body 120. Alternatively, the electrical interface 136 discussed above is configured to act as a charging port configured to receive power from the charging station 6 such that a separate charging port is not required.

The additional components 138 of the main body 120 may, if the power source 128 is a rechargeable battery, include a battery charging control circuit, for controlling the charging of the rechargeable battery. However, a battery charging control circuit could equally be located in the charging station 6 (if present).

The additional components 138 of the main body 120 may include an airflow sensor for detecting airflow in the smoking substitute device 110, e.g. caused by a user inhaling through a mouthpiece 166 (discussed below) of the smoking substitute device 110. The smoking substitute device 110 may be configured to be activated when airflow is detected by the airflow sensor. This optional sensor could alternatively be included in the consumable 150 (though this is less preferred where the consumable 150 is intended to be disposed of after use, as in this example).

The additional components 138 of the main body 120 may include an actuator, e.g. a button. The smoking substitute device 110 may be configured to be activated when the actuator is actuated. This provides an alternative to the airflow sensor noted, as a mechanism for activating the smoking substitute device 110.

The additional components 138 of the main body 120 may include a reader configured to read information associated with the consumable from a machine readable data source included in (e.g. contained in the body of, or attached to) the consumable 150.

The reader may be configured to read information from the machine readable data source wirelessly, e.g. via electromagnetic waves or optically. Thus, for example, the machine readable data source included in the consumable 150 could be an RFID tag (in which case the reader included in the main body 120 may be an RFID reader) or a visual data source such as a barcode (in which case the reader included in the main body may be an optical reader, e.g. a barcode scanner). Various wireless technologies and protocols may be employed to allow the reader to wirelessly read information from a machine readable data source included in or attached to the consumable 150, e.g. NFC, Bluetooth, Wi-Fi, as would be appreciated by a skilled person.

For avoidance of any doubt, the reader (if present) may be configured to read information from the machine readable data source non-wirelessly, e.g. using a direct electrical connection between the main body 120 and consumable 150.

As shown in Fig. 3(b), the consumable 150 includes the tank 156, an electrical interface 160, a heating device 162, one or more air inlets 164, a mouthpiece 166, and, optionally, one or more additional components 168.

The electrical interface 160 of the consumable 150 may include one or more electrical contacts. The electrical interface 136 of the main body 120 and an electrical interface 160 of the consumable 150 are preferably configured to contact each other and therefore electrically couple the main body 120 to the consumable 150 when the main body 120 is physically coupled to the consumable 150. In this way, electrical energy (e.g. in the form of an electrical current) is able to be supplied from the power source 128 in the main body 120 to the heating device 162 in the consumable 150.

The heating device 162 is preferably configured to heat e-liquid contained in the tank 156, e.g. using electrical energy supplied from the power source 128. In one example, the heating device 162 may include a heating filament and a wick, wherein a first portion of the wick extends into the tank 156 in order to draw e-liquid out from the tank 156, and wherein the heating filament coils around a second portion of the wick located outside the tank 156. In this example, the heating filament is configured to heat up e-liquid drawn out of the tank 156 by the wick to produce an aerosol vapour.

The one or more air inlets 164 are preferably configured to allow air to be drawn into the smoking substitute device 110, when a user inhales through the mouthpiece 166.

The additional components 168 of the consumable 150 may include a machine readable data source, which may e.g. be contained in the body of, or attached to the consumable 150. The machine readable data source may store information associated with the consumable. The information associated with the consumable may include information concerning the content of the consumable (e.g. e-liquid type, batch number) and/or a unique identifier, for example.

The machine readable data source may be rewritable, e.g. a rewritable RFID chip, or read only, e.g. a visual data source such as a barcode. As indicated above, the additional components 138 of the main body 120 may include a reader configured to read information associated with the consumable from the machine readable data source.

In use, a user activates the smoking substitute device 110, e.g. through actuating an actuator included in the main body 120 or by inhaling through the mouthpiece 166 as described above. Upon activation, the control unit 130 may supply electrical energy from the power source 128 to the heating device 162 (via electrical interfaces 136, 166), which may cause the heating device 162 to heat e-liquid drawn from the tank 156 to produce a vapour which is inhaled by a user through the mouthpiece 166.

Of course, a skilled reader would readily appreciate that the smoking substitute device 110 shown in Figs. 2 and 3 shows just one example implementation of a smoking substitute device, and that other forms of smoking substitute device could be used as the smoking substitute device 10 of Fig. 1.

By way of example, a HNB smoking substitute device including a main body and a consumable could be used as the smoking substitute device 10 of Fig. 1, instead of the smoking substitute device 110. One such HNB smoking substitute device is the IQOS™ smoking substitute device discussed above.

As another example, an open system vaping device which includes a main body, a refillable tank, and a mouthpiece could be used as the smoking substitute device 10 of Fig. 1, instead of the smoking substitute device 110. One such open system vaping device is the blu PRO™ e-cigarette discussed above.

As another example, an entirely disposable (one use) smoking substitute device could be used as the smoking substitute device 10 of Fig. 1, instead of the smoking substitute device 110.

Embodiments of the present invention relate to the configuration and use of a network-enabled smoking substitute device such as that discussed above in relation to Fig. 1. In particular, they relate to monitoring the status of one or more components in the device such as the battery or other power source and controlling operation of the device, based at least in part on the monitored status of the battery or other power source.

In embodiments of the invention, as described in more detail below, operation of selected components within the device may be favoured over others, in the event that the monitored battery status is determined to be insufficient to run all of (or multiple of) the components simultaneously, at an acceptable level of performance. For example, if insufficient power is available to heat the heating element, and thus the output of the device is affected, i.e. less vapour is being produced because the heating element doesn't get as hot, the heating element may temporarily cease to function, until the battery is recharged to a certain level. However at least certain selected other components of the device will be allowed to continue to function during this time. For example, the wireless interface may be allowed to continue to transmit data to a mobile device, and/or the memory may log non-vape related data and/or transfer data from a buffer to a non-volatile memory, when operation of the heating element has been temporarily suspended.

In embodiments of the invention, a plurality of components within a smoking substitute device may be monitored. For example, the component may include any one or more of the power source, heating device, consumable, etc. An application (app) running on a mobile device, to which the smoking substitute device can transmit information, may process the received information to determine status information for the components. The app may be configured to transmit control signals back to the smoking substitute device, based on that received information, and/or to transmit a message to the user suggesting pre-emptive action, such as suggesting that the device needs to be recharged. Alternatively or additionally, the information obtained from monitoring one or more of the components may be used by the control unit of the smoking substitute device itself in order to control subsequent operations of the device.

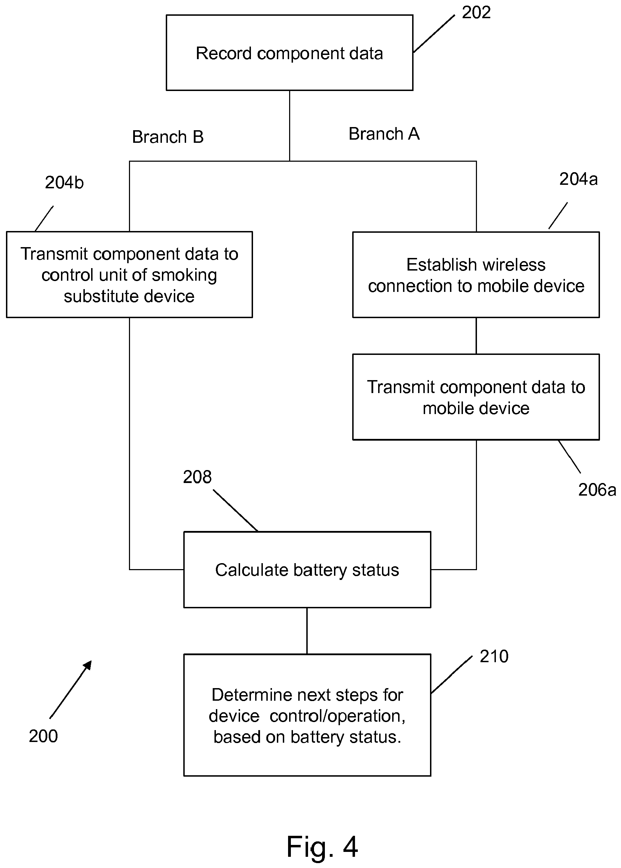

Fig. 4 is a flow chart showing steps in a component monitoring method 200 that can be followed according to an embodiment of the invention. The method 200 begins with a step 202 of recording component data in a smoking substitute device, such as the device 110 discussed above. For example; the component may be the power source in the main body, for example a battery such as a rechargeable battery. Alternatively or additionally, the component may be a part of the consumable such as the tank, the heating device or the like. However embodiments of the present invention are concerned predominantly with monitoring the power source such as the battery within the main body of the smoking substitute device, and controlling subsequent operation of the device based on the real-time status of the battery.

The component data may be recorded repeatedly, in a regular or periodic manner or in an ad hoc manner. Preferably, when the component is the battery, the component data is recorded on a regular or periodic basis. The component data may be obtained by measuring or otherwise detecting a property of the component, wherein the property of the component exhibits a change during operation of the smoking substitute device.

The step 202 may thus include detecting, by the smoking substitute device, a plurality of component property measurements. The component data may be generated from the plurality of component property measurements, as a component data log.

When the monitored component is the battery for the device, the recorded data may comprise a battery data log. The battery data log may be a data structure that is indicative of battery status measurements recorded by the smoking substitute device. In one example, the control unit 130 of the main body 120 of the device is arranged to execute a routine that measures a charge related property of the battery and record the result with a timestamp 132. The battery data log may be a collection of this type of battery status measurements.

The charge related property of the battery may be any parameter that allows the battery's remaining charge to be calculated. For example, the charge related property may be the battery's voltage. The routine may be executed periodically, whereby the battery data log is indicative of the change over time of the voltage. In another example, the charge related property may be indicative of drawn charge from the battery, e.g. measured by the amount of current drawn together with the period for which it was drawn. In this example, the routine may be executed for each activation event of the device, e.g. each time the user inhales to draw vapour.

The battery may comprise any suitable battery cell or combination of battery cells. For example, it may be a lithium cell. The monitoring means provided within the smoking substitute device for monitoring a charge related property of the battery may comprise any suitable battery monitoring circuitry. For example, it may include components that are configured to measure voltage and/or current, together with the time at which (or time period over which) the measurement(s) were taken.

The component data may relate to the configuration of the device. For example, it may relate to the type of battery or the power configuration of the device, which may affect the voltage applied to the heating element on each activation event.

It is possible for other components to be monitored by the device, and their data recorded, in a similar manner to the method described herein for monitoring and recording battery data. This can be done in addition to monitoring and recording battery data. However, the monitoring of those other components' data will not be discussed in further detail herein.

As mentioned above, the component data obtained by the monitoring means within the smoking substitute device may be processed internally by the control unit of the device. Additionally or alternatively, the data may be transmitted to an external processing means such as a remote mobile device, for example the mobile device 2 discussed above. Processing may occur at the mobile device itself and/or at another location in communication with the mobile device, e.g. using a cloud-based application or the like.

Branch 'A' of Fig.4 shows a step 204a according to an optional embodiment in which the monitored battery data is to be transmitted to a mobile device. Branch 'B' of Fig.4 shows a step 204b according to another embodiment, which can be followed in addition to or as an alternative to branch A, wherein the monitored battery data is transmitted to suitable processing means within the smoking substitute device. For example, the processing means may be the control unit 130 as shown in Fig.3(a) and may comprise a microprocessor. The processing means may be configured to compare an instantaneous or up-to-date measure of battery component data, such as a battery charge (i.e. remaining power) level, to one or more predetermined levels or thresholds. This will be discussed further below.

According to step 204a, comprised within branch A of Fig.4, a wireless connection is established between the smoking substitute device and a mobile device. The wireless connection may be via any suitable wireless protocol that permits transmission of information. For example, the smoking substitute device may pair with the mobile device using a short range transmission protocol such as Bluetooth™ or the like. The smoking substitute device may be wirelessly connectable to a mobile device via any suitable personal area network.

The method of branch A continues with a step 206a of transmitting, from the smoking substitute device to the mobile device over the established wireless connection, the recorded battery component data.

The battery component data that has been obtained by the monitoring means will be stored, at least temporarily, in a memory of the smoking substitute device. In a device which embodies the method of branch A, disclosed herein, some or all of the stored battery component data may be renewed or restarted after it has been successfully transmitted to the mobile device. For example, a portion or partition of the memory in the smoking substitute device that is allocated for the battery component data may be cleared following successful transmission of that data to the mobile device. In this way, information from a certain time period need only be transmitted once to the mobile device. Minimising data transfer in this way can reduce the load placed on the battery by the wireless communication module, and prolong battery life. Alternatively, the battery component data stored in the memory of the smoking substitute device may be stored for a predetermined period of time and/or the memory may be a buffer or other memory means that is configured to store such data up to a storage capacity limit wherein, when the storage capacity limit has been reached, the oldest stored data is deleted in order to make room for new data.

After its transmission and receipt at the mobile device, the battery component data may be stored locally on the mobile device and/or it may be retransmitted to an application server for subsequent processing. It is to be understood that the present disclosure contemplates processing battery component data either within a control unit of the smoking substitute device and/or at the mobile device and/or at a virtual location, for example in a cloud-based application server. The received battery component data in any of these locations may be consolidated with previously- received battery component data, to generate a more complete data history for the battery.

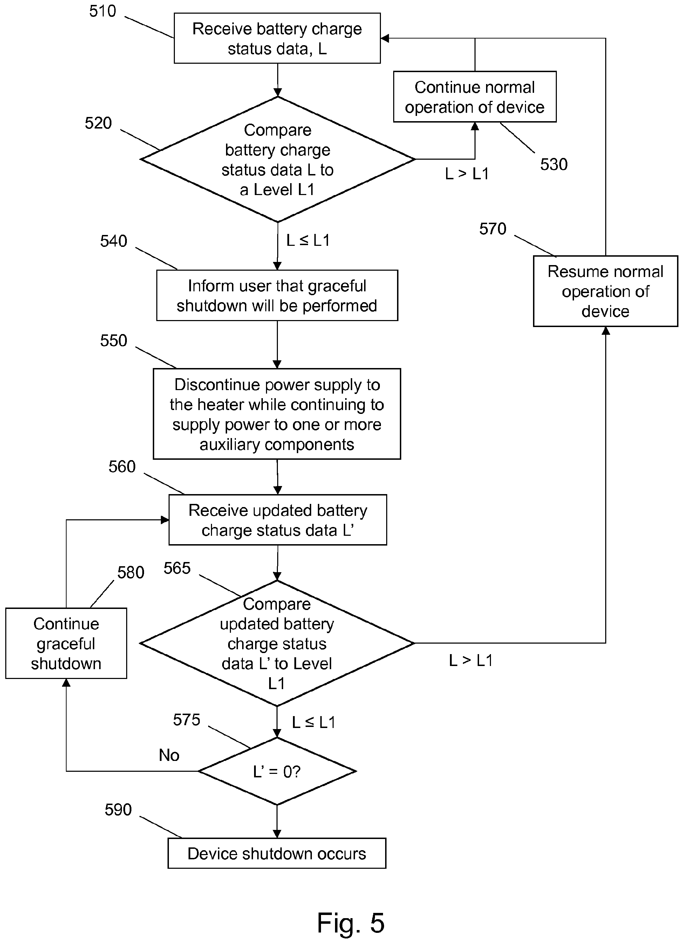

Regardless of whether branch A or branch B of the method of Fig. 4 has been followed, the next step 208 of the method is to calculate a status for the battery. This can be done by the control unit of the smoking substitute device or by a second controller, external to the smoking substitute device. In this example, this step 208 is embodied as a calculation of a charge status for the battery - i.e. to determine remaining battery power. However it may be understood that other calculations may also be made that are indicative of other parameters of the battery and/or indicative of the operation of other components within the smoking substitute device. The charge status of the battery can then be used to determine whether and how one or more components within the smoking substitute device should be operated and controlled, as detailed below in relation to Fig. 5.

As regards analysis and use of the battery charge status data; the present inventor(s) have identified that, as the sophistication of smoking substitute devices increases, for example with the devices becoming capable of telemetry and having additional component features, the manner in which the operation of such devices is controlled must also improve. In particular; it has been recognised by the present inventor(s) that the purpose of the battery of a smoking substitute device is no longer merely to provide power to a heating device. Instead, whilst the heating functionality is core to the successful operation of the device, the battery must also provide power to other (auxiliary) components such as the wireless interface (or telemetry means), the control unit, the memory, and, in some devices, additional other (auxiliary) components such as airflow sensors, lights and LED's.

Furthermore, the present inventors have recognised that, when consumers begin using more sophisticated smoking substitute devices, those consumers come to rely on and demand the operation of those devices' additional functional components. For example, a telemetry means within a smoking substitute device may be configured to transmit data to a mobile app that the user finds highly useful - such as the current state of fill of the tank and/or the data read from a consumable, such as the brand, type or flavouring of the current consumable, which the user may wish to remember and refer to for future reference. It can therefore cause user dissatisfaction if the control of at least some of these additional functional components is not properly considered as part of the process for monitoring and controlling operation of the battery. Moreover, it could cause a loss of data, including time-critical data - which could be regarded as a technical malfunction and/or could lead to errors in subsequent operation of the smoking substitute device - if certain components are allowed to lose power abruptly, without sufficient warning.

The present inventors have further recognised that, in certain circumstances, it would be preferable to prioritise continuation of certain additional functional components of a smoking substitute device, at the expense of operating the heating device, if the instantaneous battery charge status did not allow for all the components to be run concurrently in a manner that would provide user-satisfaction and correct technical functioning of the device. That is, it has been recognised that there becomes a point, during the battery discharge cycle (when the battery is losing charge, due to providing power to various components of a smoking substitute device), where the device may not function with sufficient quality for the user. This may be due to less power being available for transfer to the heating element. When this happens, the output of the device is affected, i.e. less vapour is produced because the heating element doesn't get as hot. Such a situation is unsatisfactory for the user, and so he or she may be less likely to want to use the device as a smoking substitute, until the battery has been recharged to a sufficient point as to heat the heating element to a greater extent. However, as mentioned above, there may be other operations such as telemetry and/or data recording or storing, that it would be useful to continue - both from a user satisfaction perspective and to avoid loss of data or other technical errors - at that time.

In view of the above, a method is provided herein for monitoring the battery charge status within a smoking substitute device and initiating a "graceful shutdown" of the device. During graceful shutdown - which is a gradual process, as compared to the abrupt shutdown methods of prior art smoking substitute devices - the device may still appear to be "ON", albeit only in a partially functional capacity.

Referring to Fig. 5; as a first step 510, the relevant processor or control means (which could be the control unit of the smoking substitute device or could be a second control unit, external to the smoking substitute device) receives the battery charge status data, which has been calculated for example according to the method of Fig. 4. As mentioned above, the battery charge status data could, for example, be in the form of a voltage level 'L' or in the form of an amount of current drawn from the battery per unit time. The second step 520 is to compare the battery charge status data L to a predetermined threshold level L₁. The numerical value for the predetermined threshold level 'L₁' is discussed further below. The next step taken in the method will depend on the outcome of the comparison of battery charge status data to L₁. If it is determined that the present battery charge status level exceeds L₁, then at step 530 it is determined that the smoking substitute device should continue its normal operations. It will be appreciated from the foregoing description that battery charge status data will be determined and received by the control means repeatedly, preferably periodically, and therefore steps 510 to 530 can continue until such time as it is determined at the second step 520 that the present battery charge status falls below level L₁.

If it is determined that the present battery charge status is equal to or falls below level Li, then the method proceeds to step 540, in which the user is informed that graceful shutdown of the device is beginning. The form of that message to the user may depend on the location of the controller that is carrying out the method of Fig.5. For example, if the method is being carried out locally within the control unit of a smoking substitute device, the graceful shutdown message may be conveyed to the user via a written message on an LED screen or may comprise a flashing light and/or a light of a particular colour becoming illuminated. If a written message is displayed, the content may comprise any suitable wording such as "battery recharge required" or "heating element disabled" or "graceful shutdown initiated" or any other suitable wording. If the method of Fig. 5 is being carried out by a mobile device, either within the mobile device or, for example, via a virtual processing means such as a cloud-based application running on the mobile device, any suitable message may be conveyed to the user regarding graceful shutdown, using the outputs of the mobile device. For example, a written message may flash up on the screen of the mobile device to alert the user to the graceful shutdown being initiated. Alternatively or additionally, the mobile device may make a sound and/or vibrate or send the user an SMS to alert the user to the graceful shutdown. It is also possible for the method of Fig. 5 to be carried out remotely to the smoking substitute device but for the user notification to be issued by the smoking substitute device, as a result of instructions sent to it by a mobile device.

At step 550, which may happen immediately after, or before, step 540 or simultaneously with step 540, the control means temporarily switches off power to the heating element within the smoking substitute device while allowing the battery to continue provide power to at least certain of the other functional components within the device. Dependent on the magnitude of the pre-determined level Li, and/or dependent on the number, the purpose, and/or the power requirements of the other functional components within the smoking substitute device, the control means may operate a hierarchical approach to determining which other functional components are allowed to continue functioning after power has been discontinued to the heating element. For example, the control means may prioritise continued operation of a telemetry means and/or continued operation of a memory, for example to enable data to be written from a buffer to a non volatile memory means, over the continued operation of certain other components such as, for example, a light or a consumable data reader and/or an air flow sensor, given that sensing air flow would not be required if operation of the heating element had been temporarily suspended. The control means may be configured to suspend certain peripheral functions at the same time as suspending operation of the heating element. The control means may also schedule shutdown of certain functional components before others, during the battery discharge cycle down from level L₁ to zero charge, in the event that the smoking substitute device was not recharged before the battery charge level reached zero. In such a schedule, the control means may schedule shut down of data-critical functions after shut down of more peripheral functions.

According to an embodiment, the control means will configure operation of the smoking substitute device such that battery charge status data will continue to be determined and received by the control means repeatedly, preferably periodically, even after graceful shutdown has begun. Therefore, according to an embodiment, the method continues with step 560 in which the control means receives updated battery charge status data, after graceful shutdown has been initiated. It is possible that, either independently or on receipt of the message at step 540, or as soon as practicable thereafter, the user will recharge his or her smoking substitute device during the graceful shutdown period. It is therefore possible that, during the graceful shutdown period, the battery will be recharged and, at some point in time, the battery charge level will begin to exceed predetermined threshold level L₁.If that happens, at step 570 the normal operations of the smoking substitute device can be resumed and the method will revert back to the initial step 510, in which battery charge status data is received repeatedly, preferably periodically.

According to an embodiment, battery charge status data will continue to be determined and received by the control means only for a limited time after graceful shutdown has begun, or battery charge status may not be monitored at all, after graceful shutdown has begun. In the latter example, therefore, the graceful shutdown cannot be reversed, and the mobile device would inevitably shut down completely, after a period, once the graceful shutdown process has been initiated. Of course, the mobile device could subsequently be restarted in the usual manner, once it had been recharged sufficiently.

As shown at method step 580 in Fig. 5, if, during the graceful shutdown period, the battery level is determined to still be below level L₁, the device will continue to operate in graceful shutdown mode, with operation of the heating device suspended but with some other components (i.e. "auxiliary devices") still functioning to perform so-called "background" tasks. This will continue until the battery runs out of charge. When the battery is out of charge, the whole device necessarily will shut down at step 590. The user will then have to recharge the battery in order to resume operation of the device. According to an alternative embodiment, shutdown of the device may happen at a nominal non-zero voltage level, that is below L₁. For example, it may be deemed to be less damaging for the battery, if it is not always allowed to run out of power completely. Moreover, there may be a very low voltage level, below which none of the auxiliary devices can usefully operate, such that it may be deemed best for the device to shut down completely, when that very low voltage level is reached.

According to an embodiment, in which the determined battery charge status data (L) comprises a voltage level, the power supply circuitry in the smoking substitute device includes a 3V LDO (Low Drop Out Regulator). A 3V LDO requires a "drop-out" level - i.e. a minimum difference between its input voltage and its output voltage - of 3V (3 volts) in order to maintain voltage regulation and continue to supply current at a specified level. If the drop-out falls below 3V in such an embodiment, the components that the LDO is supplying experience a drop-off in supply voltage. For a heating element, such a drop-off in supply voltage would result in reduced heating, as discussed above. Therefore, in such an embodiment, the "graceful shutdown" level L₁ for the battery would be set at just above the dropout voltage level of 3V. For example, it may be set at less than 1V greater than 3V, for example at around 3.1V - 3.3V. This enables the smoking substitute device, including the heating element, to continue to operate normally during the battery discharge cycle for as long as possible, until just before the point at which the heating element would begin (in the absence of graceful shutdown) to experience reduced heating. According to this embodiment, when L₁ is reached, instead of allowing the heating element to continue operating, with reduced heating capabilities, instead the graceful shutdown routine is initiated and operation of the heating element is temporarily suspended in order to make way for continued operation of some of the other (auxiliary) functional components of the smoking substitute device.

Therefore, according to embodiments of the invention described herein, the battery charge status of a smoking substitute device is monitored, and that monitoring data is made use of, in a sophisticated, efficient and user-friendly manner. The method, and devices configured to embody that method, can prioritise the continued function of data-critical components of the device, at least for a limited period of time, over operating the heating element at reduced capacity (which is likely to be unattractive to the user anyway). It can thus reduce the potential for loss of data, which previous, more abrupt shutdown methods would lead to. It can give the user sufficient warning to prompt recharging of the device, before total shutdown (and therefore potential data loss) has to occur. Moreover, it respects and reflects the fact that consumers who use more sophisticated smoking substitute devices come to expect, rely on and demand certain functionalities from their devices - they do not just want heating, especially if instantaneous battery charge level would only allow for impaired/reduced heating.

An example has been given above of the power circuitry including a 3V LDO however it is possible for other levels of LDO to be utilised and/or for other hardware and/or software features to be employed in order to establish be predetermined threshold level at which graceful shutdown should begin.

It may be possible for the predetermined threshold level at which graceful shutdown should begin, to be changeable for a smoking substitute device. For example, the predetermined threshold level may depend on which additional functional components are currently in use and/or on usage history of the device. It may be possible for the user to selectively determine which additional functional components should continue to operate during the graceful shutdown period and/or to determine a hierarchical order in which additional functional components should be shut down (or temporarily suspended) when the battery level of their smoking substitute device is depleted.

The term "graceful shutdown" is illustrative only and should not be construed as limiting on the invention as disclosed herein. It will be appreciated from the foregoing detailed description that so-called "graceful shutdown" is a process via which abrupt shutdown of all components of a smoking substitute device, without sufficient user warning, is avoided. Moreover, it is a process via which completion of critical processes is enabled before the smoking substitute device becomes completely inoperable, as a result of the device's battery or other power source having run out of power.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organisational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A smoking substitute device comprising:
a heating device;
at least one auxiliary device configured to perform a background task;
a battery configured to supply power to the heating device and the auxiliary device; and
a control unit, wherein the control unit is configured to obtain data indicative of the state of charge of the battery and, if it is determined that the state of charge meets a predetermined criterion indicating that the state of charge is inadequate to permit normal operation of the heating device, the control unit is configured to prevent the supply of power to the heating device whilst continuing the supply of power to the at least one auxiliary device.

2. The smoking substitute device of claim 1 further comprising battery monitoring circuitry configured to monitor a voltage of the battery, wherein the battery monitoring circuitry is configured to provide the data indicative of the state of charge of the battery.

3. The smoking substitute device of claim 1, wherein the predetermined criterion is met when the data indicative of the state of charge of the battery indicates that a magnitude of the state of charge of the battery is equal to or less than a predetermined threshold.

4. The smoking substitute device of claims 2 or 3, wherein the data indicative of the state of charge of the battery represents a voltage provided by the battery, and wherein the predetermined criterion is met when the magnitude (L) of a voltage provided by battery is equal to or less than a predetermined threshold (L1).

5. The smoking substitute device of claim 4, wherein the magnitude of the predetermined threshold is set or selected to be greater than a drop out voltage for the heating device.

6. The smoking substitute device of claim 5, wherein the magnitude of predetermined threshold is set or selected to be less than 1V greater than that of a drop out voltage.

7. The smoking substitute device of any of claims 1 to 6, wherein the at least one auxiliary device includes any one or more of: the control unit, a memory, a wireless interface, a Bluetooth antenna, a light, an LED and an airflow sensor.

8. The smoking substitute device of any of claims 1 to 7, wherein the at least one auxiliary device can be configured to record and/or store auxiliary data, during a time period in which the control unit prevents the supply of power to the heating device.

9. The smoking substitute device of any of claims 1 to 8, wherein the device is configured to provide a notification signal when the predetermined criterion is met.

10. The smoking substitute device of any of claims 1 to 9 configured to transfer data to a mobile device during a time period in which the control unit prevents the supply of power to the heating device.

11. A method of controlling an operation of the smoking substitute device of any preceding claim, the method comprising:
obtaining, at the control unit, data indicative of a state of charge of the battery;
determining whether or not the state of charge meets a predetermined criterion, indicating that the state of charge is inadequate to permit normal operation of the heating device; and, if the state of charge meets the predetermined criterion, configuring the control unit to prevent the supply of power to the heating device whilst continuing the supply of power to the at least one auxiliary device.

12. The method of claim 11, wherein the step of obtaining, at the control unit, data indicative of a state of charge of the battery comprises receiving data indicative of the state of charge of the battery from a second control unit, external to the smoking substitute device.

13. The method of claim 11 or claim 12, wherein the step of determining whether or not the state of charge meets a predetermined criterion is carried out by a second control unit, external to the smoking substitute device.

14. The method of claim 11, wherein the step of obtaining, at the control unit, data indicative of a state of charge of the battery includes receiving, at the control unit, a measurement, which has been obtained by one or more components within the smoking substitute device.

15. The method of claim 14, wherein the step of determining whether or not the state of charge meets a predetermined criterion is carried out by the control unit of the smoking substitute device.
